# FASCICULE DE BREVET EUROPEEN

(11) **EP 3 891 050 B1**
(45) Date de publication et mention de la délivrance du brevet: **27.12.2023**
(21) Numéro de dépôt: 19828814.4
(22) Date de dépôt: 19.11.2019
(51) Int. Cl.: B62D 25/04, B62D 27/02, B62D 25/02

(54) **OPTIMISATION DE LA JONCTION ENTRE LE PIED AVANT ET LE LONGERON DE BAS DE CAISSE**
OPTIMIERUNG DER VERBINDUNG ZWISCHEN EINER SÄULE UND EINEM LÄNGLICHEN UNTERBODENELEMENT
OPTIMIZATION OF THE JUNCTION BETWEEN THE A PILLAR AND THE UNDERBODY LONGITUDINAL MEMBER

(30) Priorité: 03.12.2018 FR 1872224
(43) Date de publication de la demande: 13.10.2021
(73) Titulaire: Stellantis Auto SAS, 78300 Poissy (FR)
(72) Inventeur: RIVIERRE, Laurent, 75015 PARIS (FR); GALLERNE, Jean Christophe, 78114 MAGNY LES HAMEAUX (FR)
(86) Numéro de dépôt international: PCT/FR2019/052751
(87) Numéro de publication internationale: WO 2020/115385

(56) Documents cités:
- EP-A1- 2 979 957
- FR-A1- 2 926 777
- US-A1- 2015 344 071
- US-A1- 2017 203 792

## Description

### Domaine technique

La présente invention revendique la priorité de la demande française 1872224 déposée le 3 décembre 2018.

L'invention a trait au domaine des véhicules automobiles, plus particulièrement à la structure latérale d'un véhicule automobile.

### Technique antérieure

Un véhicule automobile comprend, en général, plusieurs renforts permettant d'améliorer la protection du véhicule, notamment lors d'un choc frontal ou latéral. Certains de ces renforts se trouvent au niveau des pieds avant et des longerons de bas de caisse, et présentent une section transversale en U.

Le document de brevet publié US 2017/0050679 A1 divulgue une structure inférieure de véhicule automobile, et plus particulièrement une jonction entre un pied avant et un longeron de bas de caisse. Plusieurs renforts sont également décrits dans ce document, dont un renfort de pied avant et un renfort de longeron. Le renfort de longeron présente deux portions interne et externe, chacune présentant une section transversale en U fixée contre la portion du longeron correspondante. La portion interne du renfort de longeron comprend en outre une plaque de renforcement supplémentaire, positionnée contre la partie supérieure et interne dudit renfort. La structure décrite dans ce document est donc complexe car elle comprend de nombreuses pièces. Cette structure est donc difficile à mettre en oeuvre.

Le document de brevet publié FR 2 926 777 A1 divulgue une jonction entre un pied avant et un longeron de bas de caisse de véhicule, avec les caractéristiques du préambule de la revendication indépendante 1.

### Exposé de l'invention

L'invention a pour objectif de pallier au moins un des inconvénients de l'état de la technique susmentionné. Plus particulièrement, l'invention a pour objectif de simplifier et d'optimiser par rapport à leur masse les renforts de pied avant et de longeron de bas de caisse existants.

L'invention a pour objet un véhicule automobile comprenant, de chaque côté : un renfort de pied avant présentant un profil avec une portion verticale, une portion horizontale et une portion coudée entre les portions verticale et horizontale, et une section transversale en U avec des pattes formant avec un profilé intérieur vertical et un longeron intérieur des feuillures de jonction ; et un renfort de longeron, généralement rectiligne et présentant une section transversale en U avec des pattes formant avec le longeron intérieur des feuillures de jonction ; remarquable en ce que la portion horizontale du renfort de pied avant présente, sur une moitié inférieure, un évidement de matière, le renfort de longeron occupant ledit évidement et formant avec le longeron intérieur la feuillure de jonction inférieure jusqu'à la portion coudée dudit renfort.

Selon l'invention, la section transversale en U de la portion horizontale du renfort de pied avant présente une âme tronquée par l'évidement de matière, le renfort de longeron comprenant une portion terminale s'étendant sous, et étant fixée à ladite âme.

Selon un mode avantageux de l'invention, la portion terminale du renfort de longeron présente une section transversale en U et s'étendant jusque dans la portion coudée du renfort de pied avant.

Selon un mode avantageux de l'invention, l'âme tronquée de la section transversale en U de la portion horizontale du renfort de pied avant présente un enfoncement s'étendant longitudinalement et en contact direct avec la portion terminale du renfort de longeron. L'enfoncement est avantageusement plan et parallèle à un plan principal de l'âme tronquée. L'enfoncement est avantageusement à une distance du plan principal de l'âme tronquée comprise entre 1 et 5mm.

Selon un mode avantageux de l'invention, la portion terminale du renfort de longeron présente une extrémité dans la portion coudée du renfort de pied avant, avec une partie inférieure inclinée adjacente à une paroi latérale inférieure coudée de ladite portion coudée.

Selon un mode avantageux de l'invention, l'évidement de matière s'étend horizontalement jusque dans la portion coudée du renfort de pied avant.

Selon un mode avantageux de l'invention, la portion coudée du renfort de pied avant forme, avec le longeron intérieur, une portion terminale de la feuillure de jonction inférieure.

Selon un mode avantageux de l'invention, la feuillure de jonction inférieure formée par le renfort de longeron et le longeron intérieur est adjacente à la portion terminale de la feuillure de jonction inférieure, au droit de la portion verticale du renfort de pied avant.

Selon un mode avantageux de l'invention, la feuillure de jonction inférieure formée par le renfort de longeron et le longeron intérieur comprend, à un bord inférieur, une découpe destinée à recevoir un cric de levage, ladite feuillure comprenant, à l'avant de ladite découpe, au moins un point de soudure par résistance électrique avec le longeron intérieur.

Selon un mode avantageux de l'invention, la feuillure de jonction inférieure formée par le renfort de longeron et le longeron intérieur forme une extrémité avant avec la ou les points de soudure et faisant une saillie vers l'avant.

Les mesures de l'invention sont intéressantes en ce qu'elles permettent de simplifier la jonction entre le pied avant et le longeron. Cette simplification entraîne une diminution de la quantité de matière utilisée pour la fabrication des renforts, donc une diminution de la masse totale du véhicule. La résistance du pied avant et du longeron de bas de caisse lors d'un choc frontal ou latéral n'est pas diminuée par rapport aux structures produites antérieurement. Les zones de fixation entre les renforts de pied avant et de longeron sont plus importantes, ce qui permet d'améliorer la solidité de la jonction. De plus, l'invention est facile à produire et à mettre en oeuvre.

D'autres caractéristiques et avantages de la présente invention seront mieux compris à l'aide de la description et des dessins.

### Brève description des dessins

[Fig 1] est une vue en perspective du véhicule automobile selon l'invention ;
[Fig 2] représente une vue de l'extérieur de la jonction entre le renfort de pied avant et le renfort de longeron ;
[Fig 3] représente une vue de l'intérieur de la jonction entre le renfort de pied avant et le renfort de longeron tel que représenté à la figure 2.

### Description détaillée

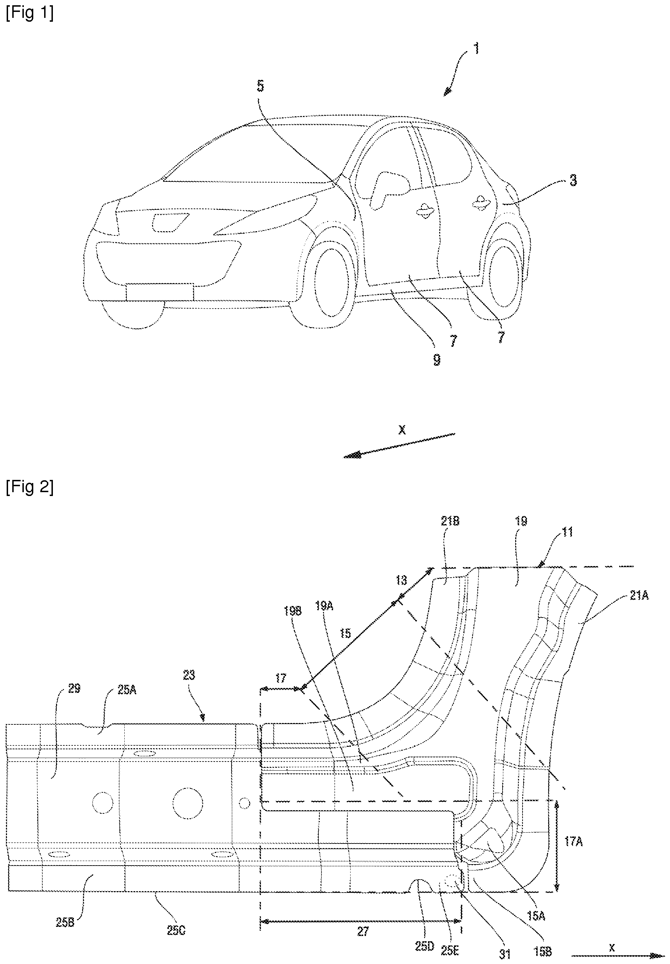

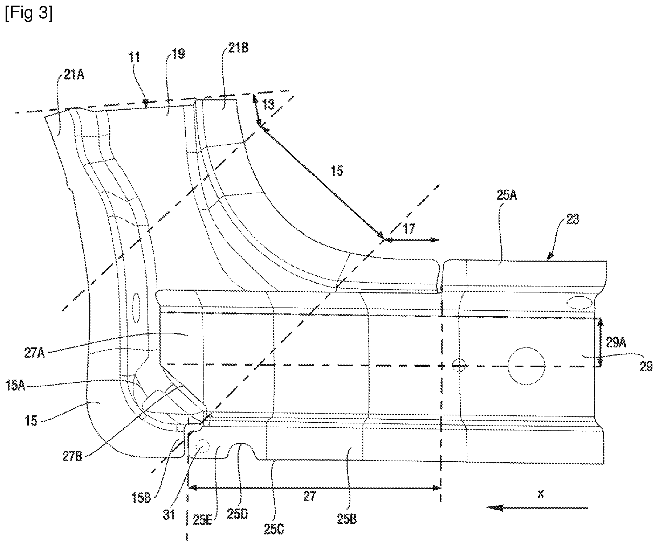

La figure 1 représente une vue en perspective d'un véhicule automobile selon l'invention. Le véhicule 1 comprend, à chacun des côtés 3, au moins une porte 7 soutenue à l'avant par un pied avant 5 et, en continuité du pied avant 5 et sous la porte 7, un longeron 9 de bas de caisse. Le pied avant 5 et le longeron 9 comprennent des renforts de pied avant et de longeron, qui seront décrits plus en détail dans les figures 2 et 3. La flèche de direction x montre le sens de déplacement du véhicule automobile 1.

Les figures 2 et 3 montrent, respectivement, une vue de l'extérieur et de l'intérieur de la jonction entre le renfort de pied avant et le renfort de longeron selon l'invention. Le renfort de pied avant 11 présente un profil avec une portion verticale 13, une portion horizontale 17 et une portion coudée 15 positionnée entre les portions verticale 13 et horizontale 17. Le renfort de pied avant 11 présente, en outre, une section transversale en U, avec une âme centrale 19, et deux pattes avant 21A et arrière 21B. Cette âme centrale 19, dans une moitié inférieure 17A de la portion horizontale 17 du renfort 11, est une âme tronquée 19A, obtenue par un évidemment de matière. Cet évidement de matière s'étend horizontalement jusque dans la portion coudée 15 du renfort de pied avant 11. L'âme tronquée 19A de la portion horizontale 17 du renfort 11 présente en outre un enfoncement 19B, qui s'étend longitudinalement dans la portion horizontale 17. La portion coudée 15 du renfort de pied avant 11 présente une paroi latérale inférieure coudée 15A.

Le renfort de longeron 23 est généralement rectiligne, et présente une section transversale en U, avec une âme 29 et des pattes supérieure 25A, et inférieure 25B. le renfort de longeron 23 occupe l'évidement laissé par le renfort de pied avant 11. Le renfort de longeron 23 comprend une portion terminale 27 qui s'étend sous et est fixée à l'âme 19 du renfort de pied avant 11. Cette portion terminale 27 présente une section transversale en U asymétrique (visible à la figure 3), qui s'étend jusque dans la portion coudée 15 du renfort de pied avant 11. Ainsi, cette portion terminale 27 est en contact direct avec l'enfoncement 19B de la portion horizontale 17 du renfort 11. La portion terminale 27 du renfort de longeron 23 présente, en outre, une extrémité 27A qui se prolonge dans la portion coudée 15 du renfort de pied avant 11, avec une partie inférieure inclinée 27B adjacente à la paroi latérale inférieure coudée 15A de la portion coudée 15 (visible à la figure 3 seulement). Sur ces figures, on peut également voir que la portion terminale 27 du renfort de longeron 23 présente, sur un bord inférieur 25C, une découpe 25D et, à l'avant de la découpe 25D, une extrémité avant 25E faisant saillie vers l'avant, apte à accueillir un point de soudure 31. D'autres points de soudure sont également retrouvés tout le long de la patte inférieure 25B, mais également entre l'enfoncement 19B du renfort de pied avant 11 et une moitié supérieure 29A de l'âme 29 du renfort de longeron 23.

De manière générale, le renfort de pied avant 11 forme, avec un profilé intérieur vertical au sein du pied avant 5 et un longeron intérieur au sein du longeron 9, des feuillures de jonction (non visibles sur ces figures) par le biais des pattes avant et arrière (21A, 21B). Le renfort de pied avant 11, avec le profilé intérieur vertical et le longeron intérieur forment ainsi deux poutres. De la même façon, le renfort de longeron 23 forme, avec le longeron intérieur, des feuillures de jonction (non visibles sur ces figures), par le biais des pattes supérieure et inférieure (25A, 25B). Plus préférentiellement, la portion coudée 15 du renfort de pied avant 11 forme, avec le longeron intérieur, une portion terminale de la feuillure de jonction inférieure. La feuillure de jonction inférieure du longeron s'étend préférentiellement jusqu'à la portion coudée 15 du renfort de pied avant 11, ladite feuillure du longeron étant adjacente à la portion terminale de la feuillure de jonction inférieure de la portion coudée 15 et au droit de la portion verticale 13 du renfort de pied avant 11. La feuillure de jonction inférieure formée par le renfort de longeron 23 et le longeron intérieur comprend, à un bord inférieur, la découpe destinée à recevoir un cric de levage, ladite feuillure comprenant, à l'avant de ladite découpe, au moins un point de soudure 31 par résistance électrique avec le longeron intérieur. La feuillure de jonction inférieure formée par le renfort de longeron 23 et le longeron intérieur forme une extrémité avant avec la ou les points de soudure 31 et faisant une saillie vers l'avant.

## Revendications

1. Véhicule automobile (1) comprenant, de chaque côté (3) :
- un renfort de pied avant (11) présentant un profil avec une portion verticale (13), une portion horizontale (17) et une portion coudée (15) entre les portions verticale (13) et horizontale (17), et une section transversale en U avec des pattes (21A, 21B) formant avec un profilé intérieur vertical et un longeron intérieur des feuillures de jonction ; et
- un renfort de longeron (23), généralement rectiligne et présentant une section transversale en U avec des pattes (25A, 25B) formant avec le longeron intérieur des feuillures de jonction ;
la portion horizontale (17) du renfort de pied avant (11) présentant, sur une moitié inférieure (17A), un évidement de matière, le renfort de longeron (23) occupant ledit évidement et formant avec le longeron intérieur la feuillure de jonction inférieure jusqu'à la portion coudée (15) dudit renfort (11), **caractérisé en ce que** la section transversale en U de la portion horizontale (17) du renfort de pied avant (11) présente une âme tronquée (19A) par l'évidement de matière, le renfort de longeron (23) comprenant une portion terminale (27) s'étendant sous, et étant fixée à ladite âme (19A).

2. Véhicule automobile (1) selon la revendication 1, **caractérisé en ce que** la portion terminale (27) du renfort de longeron (23) présente une section transversale en U et s'étendant jusque dans la portion coudée (15) du renfort de pied avant (11).

3. Véhicule automobile (1) selon l'une des revendications 1 et 2, **caractérisé en ce que** l'âme tronquée (19A) de la section transversale en U de la portion horizontale (17) du renfort de pied avant (11) présente un enfoncement (19B) s'étendant longitudinalement et en contact direct avec la portion terminale (27) du renfort de longeron (23).

4. Véhicule automobile (1) selon l'une des revendications 1 à 3, **caractérisé en ce que** la portion terminale (27) du renfort de longeron (23) présente une extrémité (27A) dans la portion coudée (15) du renfort de pied avant (11), avec une partie inférieure inclinée (27B) adjacente à une paroi latérale inférieure coudée (15A) de ladite portion coudée (15).

5. Véhicule automobile (1) selon l'une des revendications 1 à 4, **caractérisé en ce que** l'évidement de matière s'étend horizontalement jusque dans la portion coudée (15) du renfort de pied avant (11).

6. Véhicule automobile (1) selon l'une des revendications 1 à 5, **caractérisé en ce que** la portion coudée (15) du renfort de pied avant (11) forme, avec le longeron intérieur, une portion terminale de la feuillure de jonction inférieure.

7. Véhicule automobile (1) selon la revendication 6, **caractérisé en ce que** la feuillure de jonction inférieure formée par le renfort de longeron (23) et le longeron intérieur est adjacente à la portion terminale de la feuillure de jonction inférieure, au droit de la portion verticale (13) du renfort de pied avant (11).

8. Véhicule automobile (1) selon l'une des revendications 1 à 7, **caractérisé en ce que** la feuillure de jonction inférieure formée par le renfort de longeron (23) et le longeron intérieur comprend, à un bord inférieur, une découpe destinée à recevoir un cric de levage, ladite feuillure comprenant, à l'avant de ladite découpe, au moins un point de soudure (31) par résistance électrique avec le longeron intérieur.

9. Véhicule automobile (1) selon la revendication 4 et selon la revendication 8, **caractérisé en ce que** la feuillure de jonction inférieure formée par le renfort de longeron (23) et le longeron intérieur forme une extrémité avant avec la ou les points de soudure (31) et faisant une saillie vers l'avant.

## Patentansprüche

1. Kraftfahrzeug (1), auf jeder Seite (3) mit:
- eine vordere Fußverstärkung (11) mit einem Profil mit einem vertikalen Abschnitt (13), einem horizontalen Abschnitt (17) und einem abgewinkelten Abschnitt (15) zwischen dem vertikalen Abschnitt (13) und dem horizontalen Abschnitt (17) und einem U-förmigen Querschnitt mit Laschen (21A, 21B), die mit einem vertikalen Innenprofil und einem inneren Längsträger der Verbindungslaschen gebildet sind; und
- eine im Allgemeinen geradlinige Längsträgerverstärkung (23) mit U-förmigem Querschnitt mit Laschen (25A, 25B), die zusammen mit dem inneren Längsträger Verbindungsblätter bilden;
der horizontale Abschnitt (17) der vorderen Fußverstärkung (11), der an einer unteren Hälfte (17A) eine Materialausnehmung aufweist, wobei die Längsträgerverstärkung (23) die Ausnehmung einnimmt und mit dem inneren Längsträger den unteren Verbindungsfalz bis zum abgewinkelten Abschnitt (15) der Verstärkung (11) bildet, **dadurch gekennzeichnet, dass** der U-förmige Querschnitt des horizontalen Abschnitts (17) der vorderen Fußverstärkung (11) einen abgeschnittenen Steg (19A) durch die Materialausnehmung, die Längsträgerverstärkung (2aufweist 3) einen Endabschnitt (27) aufweist, der sich unter dem Kern (19A) erstreckt und an diesem befestigt ist.

2. Kraftfahrzeug (1) nach Anspruch 1, **dadurch gekennzeichnet, dass** der Endabschnitt (27) der Längsträgerverstärkung (23) einen U-förmigen Querschnitt aufweist und sich bis in den abgewinkelten Abschnitt (15) der vorderen Fußverstärkung (11) erstreckt.

3. Kraftfahrzeug (1) nach einem der Ansprüche 1 und 2, **dadurch gekennzeichnet, dass** der Kegelstumpf (19A) des U-förmigen Querschnitts des horizontalen Abschnitts (17) der vorderen Fußverstärkung (11) eine sich in Längsrichtung erstreckende Einsenkung (19B) aufweist, die in direktem Kontakt mit dem Endabschnitt (27) der Längsträgerverstärkung (23) steht.

4. Kraftfahrzeug (1) nach einem der Ansprüche 1 bis 3, **dadurch gekennzeichnet, dass** der Endabschnitt (27) der Längsträgerverstärkung (23) ein Ende (27A) in dem abgewinkelten Abschnitt (15) der vorderen Fußverstärkung (11) mit einem geneigten unteren Abschnitt (27B) aufweist, der an eine abgewinkelte untere Seitenwand (15A) des abgewinkelten Abschnitts (15) angrenzt.

5. Kraftfahrzeug (1) nach einem der Ansprüche 1 bis 4, **dadurch gekennzeichnet, dass** sich die Materialausnehmung horizontal bis in den abgewinkelten Abschnitt (15) der vorderen Fußverstärkung (11) erstreckt.

6. Kraftfahrzeug (1) nach einem der Ansprüche 1 bis 5, **dadurch gekennzeichnet, dass** der abgewinkelte Abschnitt (15) der vorderen Fußverstärkung (11) zusammen mit dem inneren Längsträger einen Endabschnitt des unteren Verbindungsfalzes bildet.

7. Kraftfahrzeug (1) nach Anspruch 6, **dadurch gekennzeichnet, dass** der untere Verbindungsfalz, der durch die Längsträgerverstärkung (23) und den inneren Längsträger gebildet wird, an den Endabschnitt des unteren Verbindungsfalzes angrenzt, und zwar an dem vertikalen Abschnitt (13) der vorderen Fußverstärkung (11).

8. Kraftfahrzeug (1) nach einem der Ansprüche 1 bis 7, **dadurch gekennzeichnet, dass** der durch die Längsträgerverstärkung (23) und den inneren Längsträger gebildete untere Verbindungsfalz an einem unteren Rand einen Ausschnitt zur Aufnahme eines Hebewagens aufweist, wobei der genannte Falz vor dem genannten Ausschnitt mindestens einen Schweißpunkt (31) durch elektrischen Widerstand mit dem inneren Längsträger aufweist.

9. Kraftfahrzeug (1) nach Anspruch 4 und Anspruch 8, **dadurch gekennzeichnet, dass** der durch die Längsträgerverstärkung (23) und den inneren Längsträger gebildete untere Verbindungsfalz ein vorderes Ende mit der oder den Schweißpunkten (31) bildet und nach vorne vorsteht.

## Claims

1. Motor vehicle (1) comprising, on each side (3):
- a front foot reinforcement (11) having a profile with a vertical portion (13), a horizontal portion (17) and an angled portion (15) between the vertical (13) and horizontal (17) portions, and a U-shaped cross section with tabs (21A, 21B) forming junction rabbets with a vertical inner profile and an inner spar; and
- a spar reinforcement (23), generally rectilinear and having a U-shaped cross-section with lugs (25A, 25B) forming with the inner spar junction rabbets;
the horizontal portion (17) of the front foot reinforcement (11) having, on a lower half (17A), a recess of material, the spar reinforcement (23) occupying said recess and forming with the inner spar the lower junction rebate up to the bent portion (15) of said reinforcement (11), **characterized in that** the U-shaped cross section of the horizontal portion (17) of the front foot reinforcement (11) has a truncated core (19A) by the recess of material, the spar reinforcement (23) comprising a portion terminal (27) extending under, and being fixed to said core (19A).

2. Motor vehicle (1) according to claim 1, **characterized in that** the end portion (27) of the spar reinforcement (23) has a U-shaped cross-section and extends as far as the bent portion (15) of the front foot reinforcement (11).

3. Motor vehicle (1) according to either of claims 1 and 2, **characterized in that** the truncated core (19A) of the U-shaped cross-section of the horizontal portion (17) of the front foot reinforcement (11) has a recess (19B) extending longitudinally and in direct contact with the end portion (27) of the longitudinal member reinforcement (23).

4. Motor vehicle (1) according to one of claims 1 to 3, **characterized in that** the end portion (27) of the spar reinforcement (23) has an end (27A) in the bent portion (15) of the front foot reinforcement (11), with an inclined lower part (27B) adjacent to an angled lower side wall (15A) of the said angled portion (15).

5. Motor vehicle (1) according to one of claims 1 to 4, **characterized in that** the recess of material extends horizontally as far as the bent portion (15) of the front foot reinforcement (11).

6. Motor vehicle (1) according to one of claims 1 to 5, **characterized in that** the bent portion (15) of the front foot reinforcement (11) forms, with the inner spar, an end portion of the lower junction rebate.

7. Motor vehicle (1) according to claim 6, **characterized in that** the lower junction rebate formed by the spar reinforcement (23) and the inner spar is adjacent to the end portion of the lower junction rebate, in line with the vertical portion (13) of the front foot reinforcement (11).

8. Motor vehicle (1) according to one of claims 1 to 7, **characterized in that** the lower junction rebate formed by the spar reinforcement (23) and the inner spar comprises, at a lower edge, a cut-out intended to receive a lifting jack, the said rebate comprising, at the front of the said cut-out, at least one spot (31) for welding by electrical resistance to the inner spar.

9. Motor vehicle (1) according to claim 4 and claim 8, **characterized in that** the lower junction rebate formed by the spar reinforcement (23) and the inner spar forms a front end with the weld spot or spots (31) and projecting forwards.
